# FASCICULE DE BREVET EUROPEEN

(11) **EP 1 355 102 B1**
(45) Date de publication et mention de la délivrance du brevet: **22.12.2004**
(21) Numéro de dépôt: 03290871.7
(22) Date de dépôt: 08.04.2003
(51) Int. Cl.: F16L 59/02, F16L 59/08

(54) **Gaine auto-fermable de protection thermique et son procédé de fabrication**
Selbstschliessende Wärmeschutzhülle und Verfahren zu ihrer Herstellung
Self closing thermal sleeve and process for manufacturing the same

(30) Priorité: 12.04.2002 FR 0204620
(43) Date de publication de la demande: 22.10.2003
(73) Titulaire: Federal Mogul Systems Protection Group, 60800 Crépy-en-Valois (FR)
(72) Inventeur: Laurent, Benoit, 60800 Crepy en Valois (FR); Andrieu, Hubert, 60800 Crepy en Valois (FR); Della Putta, Lucia, 60200 Compiegne (FR); Thomas, Patrick, 60800 Crepy en Valois (FR)
(74) Mandataire: Stankoff, Hélène

(56) Documents cités:
- WO-A-99/04194
- FR-A- 2 789 151
- US-A- 4 438 168

## Description

La présente invention concerne une gaine auto-fermable de protection thermique.

Elle concerne également un procédé de fabrication d'une telle gaine.

De manière générale, la présente invention concerne des gaines auto-fermables utilisées dans le domaine des véhicules automobiles et destinées à protéger mécaniquement des faisceaux de câbles disposés dans le véhicule ou encore des conduites de fluide.

Il est connu d'utiliser des gaines venant se refermer autour des faisceaux de câbles ou des conduites afin de procurer à ces derniers une protection mécanique et thermique.

Une protection de ces câbles au rayonnement infra-rouge peut ainsi être obtenue grâce à des gaines ayant une structure réfléchissante.

On connaît en particulier des gaines tissées sous forme d'une bande plane sur laquelle est ensuite fixée une couche aluminisée. Cette gaine est ensuite refermée autour d'un faisceau de câbles et maintenue en place par un système de velcro et/ou d'adhésifs.

On connaît également du document FR 2 789 151 A des bandes tissées en fibres de verre et/ou en polyester qui sont ensuite thermoformées sous une forme tubulaire. Une feuille aluminisée peut également être disposée sur la surface externe de cette gaine tubulaire auto-fermable.

Cette gaine peut être ainsi positionnée et refermée automatiquement autour d'un faisceau de câble. Puis des adhésifs de fermeture permettent de maintenir celle-ci fermée, notamment au niveau des courbes dans lesquelles la gaine auto-fermable a tendance à s'ouvrir.

La présente invention a pour but de proposer une gaine auto-fermable de protection thermique améliorée.

A cet effet, elle vise une gaine auto-fermable qui comprend une structure entrelacée comprenant d'une part un monofilament, et d'autre part, des bandelettes de feuille métallisée.

On obtient ainsi une structure unique qui présente la particularité d'avoir une surface réfléchissante propre à protéger les câbles d'un rayonnement infra-rouge.

En outre, cette structure sans feuille aluminisée rapportée offre une souplesse permettant une meilleure conformation de la gaine lors de sa mise en place sur des éléments longitudilignes, notamment au niveau des courbes.

Selon une caractéristique préférée de l'invention, cette gaine est constituée d'une structure tissée comprenant un monofilament comme fil de trame et des bandelettes de feuille métallisée comme fils de chaîne.

Cette structure peut être réalisée par un métier classique de tissage, le monofilament permettant d'assurer une certaine rigidité à cette gaine souple.

De préférence, les bandelettes de feuille métallisée sont constituées d'un film en polyester aluminisé sur ses deux faces.

Les bandelettes peuvent ainsi être obtenues par découpage en bandelettes d'un film en polyester.

Selon un autre aspect de l'invention, un procédé de fabrication d'une telle gaine auto-fermable comprend les étapes suivantes :
- réalisation d'une structure entrelacée d'une bande plane comprenant d'une part un monofilament, et d'autre part, des bandelettes de feuille métallisée ; et
- thermoformage de la bande plane sous forme d'une gaine tubulaire auto-fermable.

La structure entrelacée peut ainsi être réalisée à plat puis thermoformée sous forme d'une gaine tubulaire fendue de telle sorte que sa mise en place autour des éléments longitudilignes peut être réalisée par simple écartement des bords de la gaine, puis par fermeture de celle-ci autour des éléments.

D'autres particularités et avantages de l'invention apparaîtront encore dans la description ci-après.

Aux dessins annexés, donnés à titre d'exemples non limitatifs :
- la figure 1 est une vue d'une portion de gaine conforme à l'invention, avant thermoformage ; et
- la figure 2 est une vue partielle en perspective d'une gaine auto-fermable conforme à l'invention.

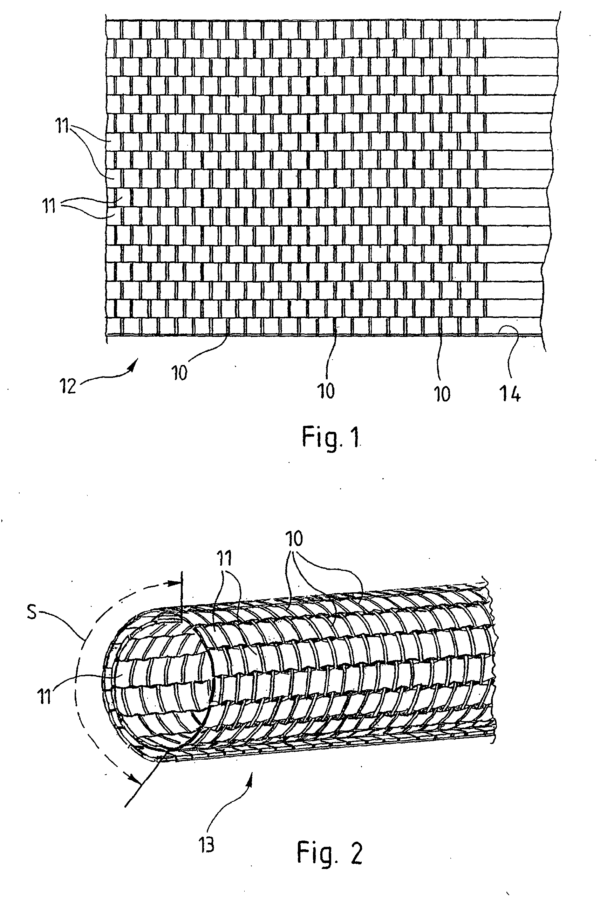

On va décrire tout d'abord en référence aux figures 1 et 2 une gaine auto-fermable de protection thermique conforme à un mode de réalisation de l'invention.

Cette gaine de protection thermique est ici constituée d'une structure entrelacée comprenant un monofilament 10 et d'autre part des bandelettes de feuille métallisée 11.

Ici cette structure entrelacée est tissée de manière classique avec un fil de trame et des fils de chaîne.

Bien entendu, d'autres structures entrelacées pourraient être utilisées, et notamment une structure tricotée ou tressée, éventuellement réalisée directement sous forme tubulaire.

Le fil de trame utilisé dans cette structure tissée est ici un monofilament.

Ce monofilament peut être un fil de polyester de diamètre compris entre 0,1 et 0,5 mm.

Un tel monofilament en polyester permet de supporter des températures élevées, de l'ordre de 150°C et d'assurer une certaine tenue à cette gaine auto-fermable.

Les fils de chaîne utilisés dans cette structure tissée sont ici constitués de bandelettes de feuille métallisée.

Ces bandelettes de feuille métallisée sont de préférence constituées d'un film en polyester aluminisé sur ses deux faces.

On peut ainsi utiliser des fils de polyester aluminisés existant dans le commerce que l'on découpe en bandelettes. Ces bandelettes peuvent se présenter sous la forme d'une bobine apte à être utilisée ensuite sur un métier à tisser.

On notera qu'il est intéressant que ces feuilles aluminisées ne comportent pas de vernis qui serait susceptible d'absorber une partie du rayonnement infra-rouge et diminuerait ainsi le pouvoir réfléchissant de cette gaine de protection thermique.

Ces bandelettes de feuille métallisée ont une largeur comprise de préférence entre 2 et 5 mm.

De manière générale, cette largeur des bandelettes pourrait être comprise entre 1 mm et 15 mm.

La Demanderesse a effectué des réalisations avec des bandelettes de 3 mm de large qui permettent d'obtenir une structure tissée tout à fait satisfaisante.

Cette bande tissée comporte en outre un fil de lisière 14, parallèle aux bandelettes de feuille métallisée 11.

Ce fil de lisière est tissée avec les bandelettes et s'étend ainsi le long d'un bord longitudinal de la gaine.

Ce fil de lisière limite l'effilochage de la gaine. Il peut être intéressant d'utiliser un fil de couleur comme fil de lisière pour d'une part, détecter facilement sa présence (son absence est un défaut) et d'autre part, identifier facilement le bord "lié" du tissu.

Comme bien illustré sur la figure 2, cette gaine auto-fermable se présente ainsi sous une forme tubulaire ayant une portion de recouvrement S qui s'étend sur un secteur angulaire compris entre 45° et 180°.

Ici, cette portion de recouvrement s'étend sensiblement sur 180°.

Cette portion relativement importante permet d'adapter la gaine de protection thermique à des diamètres différents de faisceaux de câble ou de conduites tout en garantissant la fermeture de cette gaine par recouvrement des bords.

On obtient ainsi une structure réfléchissante à partir de bandelettes de feuille aluminisée, ne requérant pas l'adjonction d'une feuille rapportée en aluminium.

Cette structure d'un seul tenant permet d'obtenir une gaine souple adaptable à diverses formes de faisceaux de câbles ou de conduites.

On va décrire à présent un procédé de fabrication permettant d'obtenir une telle gaine auto-fermable.

En pratique, on réalise tout d'abord une structure entrelacée, et par exemple une structure tissée, sous la forme d'une bande plane 12 telle qu'illustrée par exemple à la figure 1.

On peut ainsi utiliser un métier traditionnel de tissage à partir d'un monofilament et de bandelettes de feuille métallisée pour tisser une bande plane.

Ensuite, une étape de thermoformage de cette bande plane permet de conformer celle-ci en une gaine tubulaire auto-fermable 13 telle qu'illustrée à la figure 2.

L'étape de tissage de la bande plane utilise comme fil de trame un monofilament, par exemple en polyester, et comme fils de chaîne, des bandelettes de feuille métallisée, réalisées à partir d'un film polyester alluminisé.

De préférence, l'étape de thermoformage se déroule selon les sous-étapes suivantes :
- conformation à froid de la bande plane dans une forme tubulaire, avec une zone de recouvrement qui s'étend sur un secteur angulaire inférieur ou égal à 180°.
   On peut ainsi conformer la bande à froid autour d'un mandrin de diamètre approprié de telle sorte qu'une zone de recouvrement soit constituée ;
- chauffage de la forme tubulaire conformée à froid ;
   Cette température de chauffage est comprise entre le point de ramollissement du polyester et la température de fusion de ce dernier. Cette étape de chauffage a une durée relativement courte, généralement inférieure ou égale à 1 minute.
- refroidissement de la gaine thermoformée.

On refroidit ensuite cette gaine chauffée, de manière rapide, généralement par contact avec l'air ambiant.

Grâce au ramollissement du fil en polyester puis à son refroidissement, la gaine ainsi traitée reste refermée, avec une portion de recouvrement.

Bien entendu, de nombreuses modifications peuvent être apportées à l'exemple de réalisation décrit précédemment sans sortir du cadre de l'invention.

En particulier, la gaine auto-fermable de protection thermique pourrait être réalisée par un procédé de fabrication différent, mettant en oeuvre par exemple une structure tressée ou une structure tricotée.

La réalisation de la structure entrelacée directement sous forme tubulaire pourrait éventuellement être possible, et ne pas requérir de thermoformage de la bande ainsi obtenue.

En outre, la structure tissée pourrait comporter un fil de lisière sur chaque bord longitudinal de la gaine.

Enfin, la structure entrelacée pourrait comporter deux couches, une première couche comprenant les bandelettes de feuille métallisée entrelacées avec un monofilament, adaptée à réfléchir un rayonnement infra-rouge, et une seconde couche, en fibres de verre par exemple, adaptée à isoler les câbles ou les conduites de la chaleur transmise par convection ou conduction.

Cette structure entrelacée pourrait être obtenue par un procédé de tissage double face, la face en fibres de verre étant destinée à constituer la face intérieure de la gaine tubulaire.

## Revendications

1. Gaine auto-fermable de protection thermique, **caractérisée en ce qu'**elle comprend une structure entrelacée comprenant d'une part un monofilament (10), et d'autre part, des bandelettes de feuille métallisée (11).

2. Gaine auto-fermable conforme à la revendication 1, **caractérisée en ce qu'**elle est constituée d'une structure tissée comprenant un monofilament (10) comme fil de trame et des bandelettes de feuille métallisée (11) comme fils de chaîne.

3. Gaine auto-fermable conforme à l'une des revendications 1 ou 2, **caractérisée en ce que** les bandelettes de feuille métallisée (11) sont constituées d'un film en polyester aluminisé sur ses deux faces.

4. Gaine auto-fermable conforme à l'une des revendications 1 à 3, **caractérisée en ce que** les bandelettes de feuille métallisée (11) ont une largeur comprise entre 2 et 5 mm.

5. Gaine auto-fermable conforme à l'une des revendications 1 à 4, **caractérisée en ce que** le monofilament (10) est un fil de polyester de diamètre compris entre 0,1 et 0,5 mm.

6. Gaine auto-fermable conforme à l'une des revendications 1 à 5, **caractérisée en ce qu'**elle comprend une portion de recouvrement (S) s'étendant sur un secteur angulaire compris entre 45° et 180°.

7. Gaine auto-fermable conforme à l'une des revendications 1 à 6, **caractérisée en ce qu'**elle comprend au moins un fil de lisière (14), parallèle aux bandelettes de feuille métallisée (11) et s'étendant le long d'un bord longitudinal de ladite gaine.

8. Procédé de fabrication d'une gaine auto-fermable conforme à l'une des revendications 1 à 7, **caractérisé en ce qu'**il comprend les étapes suivantes :
- réalisation d'une structure entrelacée sous forme d'une bande plane (12) comprenant d'une part un monofilament (10), et d'autre part, des bandelettes de feuille métallisée (11) ; et
- thermoformage de ladite bande plane (12) sous forme d'une gaine tubulaire auto-fermable (13).

9. Procédé de fabrication conforme à la revendication 8, **caractérisé en ce qu'**il comprend une étape de tissage d'une bande plane (12) comprenant un monofilament (10) comme fil de trame et des bandelettes de feuille métallisée (11) comme fils de chaîne.

## Patentansprüche

1. Selbstschließende Wärmeschutzhülle, **dadurch gekennzeichnet, dass** sie eine verschlungene Struktur aufweist, die einerseits ein Monofilament (10) und andererseits Bändchen (11) aus metallisierter Folie umfasst.

2. Selbstschließende Hülle nach Anspruch 1, **dadurch gekennzeichnet, dass** sie aus einer gewebten Struktur gebildet ist, die als Schussfaden ein Monofilament (10) und als Kettfäden Bändchen (11) aus metallisierter Folie umfasst.

3. Selbstschließende Hülle nach einem der Ansprüche 1 oder 2, **dadurch gekennzeichnet, dass** die Bändchen (11) aus metallisierter Folie aus einem Polyesterfilm gebildet sind, der auf seinen beiden Flächen mit Aluminium beschichtet ist.

4. Selbstschließende Hülle nach einem der Ansprüche 1 bis 3, **dadurch gekennzeichnet, dass** die Bändchen (11) aus metallisierter Folie eine Breite im Bereich von 2 bis 5 mm besitzen.

5. Selbstschließende Hülle nach einem der Ansprüche 1 bis 4, **dadurch gekennzeichnet, dass** das Monofilament (10) ein Polyesterfaden mit einem Durchmesser im Bereich von 0,1 bis 0,5 mm ist.

6. Selbstschließende Hülle nach einem der Ansprüche 1 bis 5, **dadurch gekennzeichnet, dass** sie einen Überlappungsabschnitt (S) aufweist, der sich über einen Winkelsektor im Bereich von 45° bis 180° erstreckt.

7. Selbstschließende Hülle nach einem der Ansprüche 1 bis 6, **dadurch gekennzeichnet, dass** sie wenigstens einen Leistengarn (14) umfasst, der zu den Bändchen (11) aus metallisierter Folie parallel ist und sich in Richtung einer Längskante der Hülle erstreckt.

8. Verfahren zur Herstellung einer selbstschließenden Hülle nach einem der Ansprüche 1 bis 7, **dadurch gekennzeichnet, dass** es die folgenden Schritte umfasst:
- Herstellen einer verschlungenen Struktur in Form eines ebenen Bandes (12), die einerseits ein Monofilament (10) umfasst und andererseits Bändchen (11) aus metallisierter Folie umfasst; und
- Wärmeformen des ebenen Bandes (12) in Form einer selbstschließenden röhrenförmigen Hülle (13).

9. Herstellungsverfahren nach Anspruch 8, **dadurch gekennzeichnet, dass** es einen Schritt des Webens eines ebenen Streifens (12) umfasst, der als Schussfaden ein Monofilament (10) und als Kettfäden Bändchen (11) aus metallisierter Folie umfasst.

## Claims

1. A self-closing thermal protection sheath, **characterized in that** it includes an interleaved structure comprising firstly a monofilament (10) and secondly strips (11) of metallized foil.

2. A self-closing sheath according to claim 1, **characterized in that** it has a woven structure comprising a monofilament (10) as the weft filament and strips (11) of metallized foil as warp filaments.

3. A self-closing sheath according to either claim 1 or claim 2, **characterized in that** the strips (11) of metallized foil consist of a polyester film aluminized on both sides.

4. A self-closing sheath according to any of claims 1 to 3, **characterized in that** the strips (11) of metallized foil are from 2 mm to 5 mm wide.

5. A self-closing sheath according to any of claims 1 to 4, **characterized in that** the monofilament (10) is a polyester filament with a diameter from 0.1 mm to 0.5 mm.

6. A self-closing sheath according to any of claims 1 to 5, **characterized in that** it comprises an overlapping portion (S) subtending an angle from 45° to 180°.

7. A self-closing sheath according to any of claims 1 to 6, **characterized in that** it includes at least one selvage filament (14) parallel to the strips (11) of metallized foil and extending along a longitudinal edge of said sheath.

8. A method of fabricating a self-closing sheath according to any of claims 1 to 7, **characterized in that** it includes the following steps:
- producing an interleaved structure in the form of a flat tape (12) comprising firstly a monofilament (10) and secondly strips (11) of metallized foil, and
- thermoforming said flat tape (12) into a tubular self-closing sheath (13).

9. A fabrication method according to claim 8, **characterized in that** it includes a step of weaving a flat tape (12) comprising a monofilament (10) as weft filament and strips (11) of metallized foil as warp filaments.
